# EUROPEAN PATENT SPECIFICATION

(11) **EP 4 347 688 B1**
(45) Date of publication and mention of the grant of the patent: **19.02.2025**
(21) Application number: 22731158.6
(22) Date of filing: 30.05.2022
(51) Int. Cl.: C08G 64/20, C08G 64/24

(54) **REACTOR AND METHOD FOR THE MANUFACTURE OF POLYCARBONATE**
REAKTOR UND VERFAHREN ZUR HERSTELLUNG VON POLYCARBONAT
RÉACTEUR ET PROCÉDÉ DE FABRICATION DE POLYCARBONATE

(30) Priority: 31.05.2021 EP 21176886
(43) Date of publication of application: 10.04.2024
(73) Proprietor: SABIC Global Technologies B.V., 4612 PX Bergen op Zoom (NL)
(72) Inventor: SCHOENMAKERS, Gert-Jan, 6160 GA Geleen (NL); VAN GOOL, Cornelis Adrianus Maria, 6160 GA Geleen (NL); HOOGSTRATE, William, 6160 GA Geleen (NL)
(74) Representative: Algemeen Octrooi- en Merkenbureau B.V.
(86) International application number: PCT/EP2022/064525
(87) International publication number: WO 2022/253724

(56) References cited:
- US-A1- 2005 282 035
- US-B2- 7 157 544

## Description

The present invention relates to a reactor for the manufacture of interfacial polycarbonate. The present invention further relates to a method for the manufacture of interfacial polycarbonate and to the use of a reactor for the manufacture of interfacial polycarbonate.

Polycarbonate is a well-known material used in a variety of applications either as a virgin resin or in admixture with other polymers such as in particular polyesters and acrylonitrile-butadiene-styrene copolymers.

The most commonly known polycarbonate is based on bisphenol A (BPA) and such polycarbonate can be obtained by reacting a carbonate source with BPA. Polycarbonates are generally manufactured using two different technologies.

In a first technology, also referred to as the interfacial technology, phosgene is used as the carbonate source which is reacted with BPA in a two-phase liquid reaction medium comprising an organic phase and an aqueous phase. During the reaction the polymer that is formed dissolves in the organic phase. After completion of the reaction the two phases are separated, followed by purification of the organic phase comprising at least one washing step. Next, the polycarbonate is isolated from the organic phase for which different techniques exist in the art. The interfacial process is very well known to the skilled person.

US 7 157 544 B2 discloses a method for forming interfacial polycarbonate by reacting phosgene and a bisphenol in liquid phase. The reactors used for this method are preferably formed of a corrosion resistant material.

In a second technology, known as the melt technology, or melt-transesterification technology or melt polymerisation technology, typically a diaryl-carbonate or a di-alkyl carbonate is used as the carbonate source and the reactants are reacted in molten form. Conventionally the melt process is a continuous process and once the polycarbonate is formed it does not require further purification or isolation as is the case for interfacial polycarbonate.

Polycarbonate manufactured with the interfacial process is commonly known as interfacial polycarbonate whereas polycarbonate manufactured with the melt process is commonly known as melt polycarbonate. The skilled person knows that melt polycarbonate and interfacial polycarbonate are different materials, in particular in terms of end groups and branching. Thus, interfacial polycarbonate is generally highly linear and the polymer chains are end-capped meaning that the amount of phenolic OH groups, at the ends of the polymer chains, is very low. To the contrary melt polycarbonate has a significant amount of such terminal OH groups and depending on the catalyst this material has a certain amount of branching which is caused by Fries and/or Kolbe-Schmidt re-arrangement reactions, which typically occur only at high temperatures.

The present invention relates to the interfacial process.

More in particular, the present invention relates to a reactor for carrying out the interfacial reaction wherein phosgene is used as the carbonate source. The use of phosgene to manufacture polycarbonate is known to result in the formation of chlorides, chlorine and/or hydrochloric acid. In such a reactor therefore, care needs to be taken that the equipment used to process these materials is resistant to corrosion. Conventionally therefore reactors to manufacture interfacial polycarbonate are glass-lined, meaning that no metal parts are exposed to corrosive reaction products like in particular hydrochloric acid.

A disadvantage of glass lined equipment however is that these are relatively complex to manufacture and may damage as a resultant of temperature shocks or mechanical loads or vibrations. Additionally, while glass may be resistant to hydrochloric acid it is more sensitive to basic conditions containing salt and carbonates.

Accordingly it is an object of the invention to provide for a reactor for the manufacture of interfacial polycarbonate which is more resistant to mechanical and thermal loads and is preferably more easy to manufacture and maintain.

More specifically it is an object of the invention to provide for a reactor for the manufacture of interfacial polycarbonate which is more resistant to mechanical and thermal loads, is chemically resistant to both basic and acidic conditions that may apply during the manufacture of interfacial polycarbonate and is more easy to manufacture and maintain.

The present inventors have surprisingly found that a specific titanium alloy can be used for that purpose.

Accordingly the present invention relates to a reactor for the manufacture of interfacial polycarbonate by reacting phosgene and one or more bisphenols in two-phase liquid reaction medium, the reactor comprising a reactor vessel and reactor internals, wherein at least part of the inner surface of the reactor and/or part of the surface of the reactor internals is manufactured from or cladded with a titanium alloy comprising palladium.

In an aspect the titanium alloy comprises palladium and ruthenium.

In view of the corrosive nature of the chlorine containing materials that may be formed during the polymerisation reaction, the entire surface of the reactor and the reactor internals is manufacture of a material that is corrosion resistant, such as in particular glass or the titanium-palladium alloy. Preferably all the reactor internals are manufactured from or cladded with the titanium-palladium alloy, but it is also possible that only certain parts of the reactor and/or the internals are manufactured from said alloy.

In an aspect the titanium alloy may comprise from 0.12 - 0.25 wt.% of palladium. Such titanium alloy is known as ASTM Ti-grade 7. Such alloy does not contain ruthenium.

In another aspect the titanium alloy may comprise from 0.010 to 0.020 wt.% of palladium and from 0.020 to 0.040 of ruthenium. Such alloys are known as ASTM Ti-grade 33 or Ti-grade 34.

Accordingly it is preferred that the titanium alloy is selected from the group consisting of ASTM Ti-grade 7, Ti-grade 33 or Ti-grade 34.

Titanium grade 7 typically contains 0.12 to 0.25 wt. % palladium.

Titanium grade 33 typically contains 0.4wt.% nickel, 0.015wt.% palladium, 0.025 wt.% ruthenium, 0.15wt.% chromium.

Titanium grade 34 typically contains 0.4wt.% nickel, 0.015wt.% palladium, 0.025wt.% ruthenium and 0.15 wt. % chromium.

The polycarbonate synthesis can be performed continuously or batch-wise. The reaction can therefore be effected in stirred tanks, tubular reactors, pumped circulation reactors or stirred tank cascades, or combinations thereof.

It is preferred that the reaction is carried out in a vertical reactor wherein the reactor preferably comprises a stirring mechanism comprising a central shaft from which one or more stirring blades extend in a direction away from the shaft. In a vertical reactor the stirring mechanism is disposed in a vertical manner.

For the purpose of providing sufficient mixing and heat dissipation it is further preferred that the reactor comprises one or more baffles extending from an inner wall portion radially in a direction towards the central shaft.

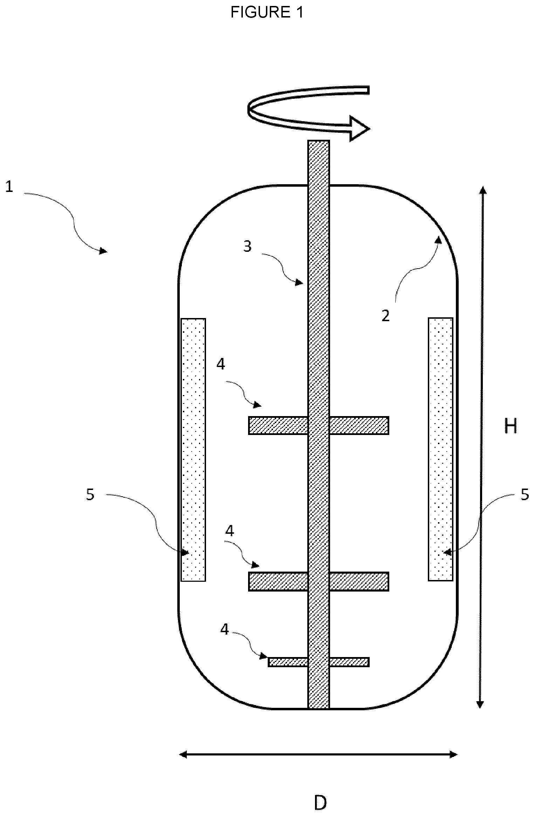

Figure 1 schematically shows a reactor 1 in accordance with a preferred embodiment of the invention. Reactor 1 has a circular cross section with a diameter D and a height H. The skilled person will understand that the diameter may not be constant and may be different at different locations. Also, the skilled person will understand that although it is preferred that the reactor is of circular cross-section other geometries are not excluded for the purpose of the present invention. Reactor 1 in Figure 1 is a vertical reactor wherein H is larger than D. Reactor 1 comprises a stirring shaft 3, or central shaft 3 which can rotate along its axis as indicated by the arrow using any suitable means for rotation (not shown). From the central shaft one or more stirring blades 4 extend in a direction away from the shaft. In the figure three stirring blades are shown, but the amount may be more, i.e. from 3-10 or less, i.e. 1 or 2. Stirring is however important in order to make sure there is sufficient surface area between the aqueous and the organic phase two phases in order to efficiently carry out the polymerisation reaction. Suitable types of stirring blades 4 are known to the skilled person.

In order to further optimise the mixing in reactor 1 one or more baffles 5 may be installed which typically extend from an inner reactor wall surface in the direction of the central shaft. The baffles 5 may comprise cooling or heating means (not shown) in order to heat or cool the two-phase reaction liquid. The amount, type and dimensions of these baffles 5 is known to a skilled person per se.

Reactants and solvents are introduced into reactor 1 using suitable introduction means (not shown) and phosgene is typically added in gaseous form from the bottom of the reactor using a suitable distributor so that the gas is divided in a controlled amount of bubbles. When the desired molecular weight of the polycarbonate is obtained an endcapping agent such paracumyl phenol, dicumyl phenol and tert-butyl phenol is added, the flow of phosgene is stopped and the two-phase reaction liquid is transported out of the reactor for further purification and polymer isolation. Typically reactor 1 is a reactor used for the batch-wise manufacture of interfacial polycarbonate.

In accordance with the invention the inner surface 2 of reactor 1 or the surface of one or more of the baffles 4, blades 4 and central shaft 3 may be manufactured from or cladded with titanium - palladium alloy. It is particularly preferred that the inner surface 2 and the baffles 5, if any of reactor 1 are manufactured from or cladded with the titanium - palladium alloy because these are typically more difficult to replace as compared to the central stirring shaft an the connected stirring blades 4. In a most preferred embodiment of the invention all the internals that may contact corrosive materials are manufactured from titanium - palladium allow, more preferably the alloy ASTM Ti-grade 7. Preferably the reactor does not contain glass or glass lined surfaces.

The present invention also relates to a method for the manufacture of interfacial polycarbonate comprising reacting phosgene and one or more bisphenols in the reactor as disclosed herein. The obtained polycarbonate can accordingly be a homopolymer, i.e. a bisphenol A polycarbonate or a copolymer of bisphenol A and one or more other diols or bisphenols. As long as the process to manufacture such copolymers is carried out in a two-phase interfacial process using phosgene as the carbonate source the method of the invention is not limited to any specific bisphenol or combination of bisphenols.

The reaction is carried out in a two-phase liquid reaction medium comprising an aqueous phase and an organic phase, wherein preferably the organic phase comprises or consists of methylene chloride, chloro-benzene or a mixture of methylene chloride and chloro-benzene.

Preferably the reaction is carried out in a batch-wise manner. Two or more reactors may be ran in parallel thereby allowing to feed downstream isolation and purification sections in a continuous manner, if so desired.

In yet a further aspect the invention relates to the use of a reactor comprising a reactor vessel and reactor internals, wherein at least part of the inner surface of the reactor and/or part of the surface of the reactor internals is manufactured from or cladded with a titanium alloy comprising palladium, for the manufacture of interfacial polycarbonate by reacting phosgene and one or more bisphenols.

Tests with Titanium grades 2, 7, 33 and 34 were performed inside a glass lined reactor under normal reaction conditions for the manufacture of polycarbonate using the phosgene based interfacial process. These tests have shown that while Ti-grade 2 showed severe weight loss and corrosion grades 7, 33 and 34 could be used for a long period of about 4 years without any signs of significant corrosion.

## Claims

1. Reactor for the manufacture of interfacial polycarbonate by reacting phosgene and one or more bisphenols in a two-phase liquid reaction medium, the reactor comprising a reactor vessel and reactor internals, wherein at least part of the inner surface of the reactor and/or part of the surface of the reactor internals is manufactured from or cladded with a titanium alloy comprising palladium.

2. The reactor of claim 1 wherein the titanium alloy comprises, based on the weight of the alloy, from 0.12 - 0.25 wt.% of palladium, or wherein the titanium alloy comprises, based on the weight of the alloy, from 0.010 to 0.020 wt.% of palladium and from 0.020 to 0.040 of ruthenium.

3. The reactor of claim 1 or 2 wherein the alloy is one or more selected from the group consisting of ASTM Ti-grade 33, ASTM Ti-grade 34 or ASTM Ti-grade 7 and is preferably ASTM Ti-grade 7.

4. The reactor of any one or more of claims 1-3 further comprising a stirring mechanism comprising a central shaft from which one or more stirring blades extend in a direction away from the shaft.

5. The reactor of claim 4 further comprising one or more baffles extending from an inner wall portion radially in a direction towards the central shaft.

6. The reactor of any one or more of claims 1-5 wherein the reactor is a vertical reactor wherein the stirring mechanism is disposed in a vertical manner.

7. Method for the manufacture of interfacial polycarbonate comprising reacting phosgene and one or more bisphenols in the reactor according to any one or more of claims 1-6.

8. The method of claim 7 wherein the reaction is carried out in a two-phase liquid reaction medium comprising an aqueous phase and an organic phase.

9. The method of claim 7 or 8 wherein the organic phase comprises or consists of methylene chloride, chloro-benzene or a mixture of methylene chloride and chlorobenzene.

10. The method of any one or more of claims 7-9 wherein the reaction is carried out in a batch manner.

11. Use of a reactor comprising a reactor vessel and reactor internals, wherein at least part of the inner surface of the reactor and/or part of the surface of the reactor internals is manufactured from or cladded with a titanium alloy comprising palladium, for the manufacture of interfacial polycarbonate by reacting phosgene and one or more bisphenols.

## Patentansprüche

1. Reaktor zur Herstellung von Grenzflächenpolycarbonat durch Umsetzung von Phosgen und einem oder mehreren Bisphenolen in einem zweiphasigen flüssigen Reaktionsmedium, wobei der Reaktor ein Reaktorgefäß und Reaktoreinbauten umfasst, wobei wenigstens ein Teil der Innenoberfläche des Reaktors und/oder ein Teil der Oberfläche der Reaktoreinbauten aus einer Titanlegierung, die Palladium umfasst, hergestellt oder damit verkleidet ist.

2. Reaktor nach Anspruch 1, wobei die Titanlegierung bezogen auf das Gewicht der Legierung von 0,12 bis 0,25 Gew.-% Palladium umfasst oder wobei die Titanlegierung bezogen auf das Gewicht der Legierung von 0,010 bis 0,020 Gew.-% Palladium und von 0,020 bis 0,040 Ruthenium umfasst.

3. Reaktor nach Anspruch 1 oder 2, wobei die Legierung eine oder mehrere ausgewählt aus der Gruppe bestehend aus ASTM Ti-Klasse 33, ASTM Ti-Klasse 34 oder ASTM Ti-Klasse 7 ist und vorzugsweise ASTM Ti-Klasse 7 ist.

4. Reaktor nach einem oder mehreren der Ansprüche 1-3, ferner umfassend einen Rührmechanismus umfassend eine zentrale Welle, von der aus sich eine oder mehrere Rührschaufeln in einer Richtung weg von der Welle erstrecken.

5. Reaktor nach Anspruch 4, ferner umfassend ein oder mehrere Leitbleche, die sich von einem Innenwandabschnitt radial in einer Richtung zu der zentralen Welle erstrecken.

6. Reaktor nach einem oder mehreren der Ansprüche 1-5, wobei der Reaktor ein vertikaler Reaktor ist, wobei der Rührmechanismus auf eine vertikale Weise angeordnet ist.

7. Verfahren zur Herstellung von Grenzflächenpolycarbonat, umfassend Umsetzen von Phosgen und einem oder mehreren Bisphenolen in dem Reaktor nach einem oder mehreren der Ansprüche 1-6.

8. Verfahren nach Anspruch 7, wobei die Reaktion in einem zweiphasigen flüssigen Reaktionsmedium, das eine wässrige Phase und eine organische Phase umfasst, durchgeführt wird.

9. Verfahren nach Anspruch 7 oder 8, wobei die organische Phase Methylenchlorid, Chlorbenzol oder ein Gemisch von Methylenchlorid und Chlorbenzol umfasst oder daraus besteht.

10. Verfahren nach einem oder mehreren der Ansprüche 7-9, wobei die Reaktion chargenweise durchgeführt wird.

11. Verwendung eines Reaktors, der ein Reaktorgefäß und Reaktoreinbauten umfasst, wobei wenigstens ein Teil der Innenoberfläche des Reaktors und/oder ein Teil der Oberfläche der Reaktoreinbauten aus einer Titanlegierung, die Palladium umfasst, hergestellt oder damit verkleidet ist, zur Herstellung von Grenzflächenpolycarbonat durch Umsetzung von Phosgen und einem oder mehreren Bisphenolen.

## Revendications

1. Réacteur pour la fabrication de polycarbonate interfacial par réaction de phosgène et d'un ou plusieurs bisphénols dans un milieu de réaction liquide biphasique, le réacteur comprenant une cuve de réacteur et des équipements internes de réacteur, au moins une partie de la surface interne du réacteur et/ou une partie de la surface des équipements internes de réacteur étant fabriquées à partir ou revêtues d'un alliage de titane comprenant du palladium.

2. Réacteur selon la revendication 1 dans lequel l'alliage de titane comprend, rapporté au poids de l'alliage, de 0,12 à 0,25 % en poids de palladium, ou dans lequel l'alliage de titane comprend, rapporté au poids de l'alliage, de 0,010 à 0,020 % en poids de palladium et de 0,020 à 0,040 de ruthénium.

3. Réacteur selon la revendication 1 ou 2 dans lequel l'alliage en est un ou plusieurs choisis dans le groupe constitué par le Ti de grade ASTM 33, le Ti de grade ASTM 34 et le Ti de grade ASTM 7 et est de préférence le Ti de grade ASTM 7.

4. Réacteur selon l'une quelconque des revendications 1 à 3 comprenant en outre un mécanisme d'agitation comprenant un arbre central à partir duquel une ou plusieurs pales d'agitation s'étendent dans une direction s'éloignant de l'arbre.

5. Réacteur selon la revendication 4 comprenant en outre un ou plusieurs déflecteurs s'étendant radialement depuis une partie de paroi interne dans une direction allant vers l'arbre central.

6. Réacteur selon l'une quelconque des revendications 1 à 5, le réacteur étant un réacteur vertical dans lequel le mécanisme d'agitation est disposé de manière verticale.

7. Procédé de fabrication de polycarbonate interfacial comprenant la réaction de phosgène et d'un ou plusieurs bisphénols dans le réacteur selon l'une quelconque des revendications 1 à 6.

8. Procédé selon la revendication 7 dans lequel la réaction est réalisée dans un milieu de réaction liquide biphasique comprenant une phase aqueuse et une phase organique.

9. Procédé selon la revendication 7 ou 8 dans lequel la phase organique comprend ou consiste en du chlorure de méthylène, du chlorobenzène ou un mélange de chlorure de méthylène et de chlorobenzène.

10. Procédé selon l'une quelconque des revendications 7 à 9 dans lequel la réaction est réalisée de manière discontinue.

11. Utilisation d'un réacteur comprenant une cuve de réacteur et des équipements internes de réacteur, au moins une partie de la surface interne du réacteur et/ou une partie de la surface des équipements internes de réacteur étant fabriquées à partir ou revêtues d'un alliage de titane comprenant du palladium, pour la fabrication de polycarbonate interfacial par réaction de phosgène et d'un ou plusieurs bisphénols.
